# EUROPÄISCHE PATENTSCHRIFT

(11) **EP 3 027 353 B1**
(45) Veröffentlichungstag und Bekanntmachung des Hinweises auf die Patenterteilung: **17.05.2023**
(21) Anmeldenummer: 14747006.6
(22) Anmeldetag: 31.07.2014
(51) Int. Cl.: B23P 11/00, F16B 4/00, B23B 31/117

(54) **WERKZEUGAUFNAHME**
TOOL HOLDING FIXTURE
LOGEMENT D'OUTIL

(30) Priorität: 31.07.2013 DE 102013108209
(43) Veröffentlichungstag der Anmeldung: 08.06.2016
(73) Patentinhaber: Haimer GmbH, 86568 Igenhausen (DE)
(72) Erfinder: POPP, Konrad, 86199 Augsburg (DE); ELGES, Johann, 86368 Gersthofen (DE); HEDRICH, Renè, 86152 Augsburg (DE); MERK, Robert, 86862 Lamerdingen (DE); KLINGER, Jürgen, 86494 Emersacker (DE)
(74) Vertreter: Charrier Rapp & Liebau
(86) Internationale Anmeldenummer: PCT/EP2014/066466
(87) Internationale Veröffentlichungsnummer: WO 2015/014925

(56) Entgegenhaltungen:
- DE-A1- 2 648 753
- DE-A1-102010 036 869
- DE-U1-202007 019 480
- DE-U1-202012 102 742
- JP-A- H06 226 516
- JP-A- 2012 096 306
- US-A- 2 593 907
- US-A- 5 865 571
- US-A1- 2009 003 947
- US-A1- 2009 160 140

## Beschreibung

Die Erfindung betrifft eine Werkzeugaufnahme nach dem Oberbegriff der Ansprüche 1 und 8.

Derartige Werkzeugaufnahmen werden als Schnittstelle zwischen einem rotatorisch angetriebenen Werkzeug und einer Arbeitsspindel einer Werkzeugmaschine eingesetzt. Sie sollen eine positionsgenaue Aufnahme der Werkzeuge zur Fertigung mit hoher Genauigkeit und einen schnellen Werkzeugwechsel ermöglichen. Die bisher bekannten Werkzeugaufnahmen enthalten üblicherweise einen aus Stahl bestehenden Aufnahmekörper, der einen vorderen Spannbereich mit einer Aufnahmeöffnung für einen Werkzeugschaft des Werkzeugs und einen hinteren Aufnahmebereich zur Aufnahme in einer Arbeitsspindel einer Werkzeugmaschine enthält. Je nach Spannsystem kann der hintere Aufnahmebereich unterschiedlich ausgestaltet sein. Da der aus Stahl bestehende Aufnahmekörper zur Erreichung der geforderten Steifigkeit jedoch bestimmte Abmessungen aufweisen muss, haben die bekannten Werkzeugaufnahmen auch eine relativ hohe Masse und ein entsprechend großes Massenträgheitsmoment. Daher müssen auch die Antriebe und Werkzeugwechselsysteme entsprechend dimensioniert sein.

Aus der DE 26 48 753 A1 ist ein als Bohrstange ausgebildetes Werkzeug mit einem aus kohlefaserverstärktem Kunststoff bestehenden rohrförmigen Schaft, einem in das vordere Ende des rohrförmigen Schafts eingesetzten Trägerkörper mit einer eingesetzten Werkzeugschneide und einem in das hintere Ende des rohrförmigen Schafts eingesetzten Halter bekannt. Der zur Aufnahme in einer Spindel ausgebildete Halter weist einen in das hintere Ende des rohrförmigen Schafts hineinragenden und daran befestigten Zapfen auf. Der Trägerkörper ist in das vordere Ende des rohrförmigen Schafts eingesetzt und dort eingeklebt. Der Trägerkörper kann zylindrisch oder auch als Vielkeil, als Polygon oder mit einem K-Profil ausgeführt sein.

Bei einer aus der JP H06 226516 A bekannte Spannzangenaufnahme weist eine auf einem vorderen Spannbereich eines Spannzangenfutters zum Spannen oder Lösen einer in dem Spannzangenfutter angeordneten Spannzange aufgeschraubte Spannmutter an ihrer Außenseite eine Nut mit einer auf die Außenfläche aufgewickelten Carbonfaserschicht auf.

Die DE 20 2012 102 742 U1 offenbart ein Bohrfutter mit einem aus faserverstärktem Kunststoff gefertigten Futterkörper, in dem mittels eines Gewinderings verstellbare Spannbacken geführt sind. Zur Verstellung des Gewinderings ist eine auf dem Futterkörper angeordnete Spannhülse vorgesehen, die über eine Zwischenhülse auf den Gewindering einwirkt. Zur Abstützung des Gewinderings in Richtung einer Werkzeugaufnahme ist eine Stützhülse vorgesehen, die wiederum über einen Sicherungsreif abgestützt.

In der US 2009/0003947 A1 ist in Figur 29 und der dazugehörigen Beschreibung eine schwingungsgedämpfte Werkzeugaufnahme mit einem maschinenseitigen Kopplungsteil 1zur Kopplung der Werkzeugaufnahme mit der Werkzeugmaschine und einem mit diesem verschraubten werkzeugseitigen Spannteil in Form eines rotationssymmetrischen aus Metall bestehenden Aufnahmekörpers zur Aufnahme eines rotatorisch angetriebenen Werkzeugs offenbart. Die Werkzeugaufnahme weist an dem Aufnahmekörper einem vorderen Spannbereich mit einer Aufnahmeöffnung für einen Werkzeugschaft eines Werkzeugs und an dem maschinenseitigen Kopplungsteil einen hinteren Aufnahmebereich zur Aufnahme in einer Arbeitsspindel einer Werkzeugmaschine auf. Zwischen einer Ringschulter des Aufnahmekörpers und einer Stirnfläche eines Ringflansches des Kopplungsteils ist eine konische Hülse eingespannt, die auch aus einem kohlefaserverstärkten Kunststoff bestehen kann. Zusätzlich zu der axialen Einspannung kann die Hülse im Bereich ihrer Stirnenden radial mit leichtem Presssitz zentriert sein.

Aufgabe der Erfindung ist es, eine Werkzeugaufnahme zu schaffen, die bei gleicher Steifigkeit eine deutlich reduzierte Masse und ein geringeres Massenträgheitsmoment aufweist.

Diese Aufgabe wird durch Werkzeugaufnahmen mit den Merkmalen des Anspruchs 1 und des Anspruchs 8 gelöst. Zweckmäßige Weiterbildungen und vorteilhafte Ausgestaltungen der Erfindung sind in den Unteransprüchen angegeben.

Bei einer ersten erfindungsgemäßen Ausführung einer Werkzeugaufnahme ist auf den vorderen Spannbereich des aus Metall bestehenden Aufnahmekörpers eine aus faserverstärktem Kunststoff bestehende Hülse aufgeschrumpft. Hierzu kann der Aufnahmekörper heruntergekühlt werden, bevor die Hülse aufgesetzt wird. Wenn sich der Aufnahmekörper dann wieder erwärmt, wird die Hülse durch einen Presssitz gehalten. Durch erneutes Herunterkühlen kann die Hülse auch entfernt oder ersetzt werden, wenn beispielsweise eine Hülse mit anderen Abmaßen oder Eigenschaften zur Verwendung kommen soll.

Die Hülse besteht zweckmäßigerweise aus mehreren Faserlagen, deren Faserverlauf nach den Kraftflüssen ausgerichtet ist, die durch Rotation, Klemmung und Bearbeitungskräfte entstehen. Diese Hülse ist relativ leicht und kann dennoch eine hohe Steifigkeit und Stabilität der Werkzeugaufnahme gewährleisten. So kann die bei herkömmlichen Werkzeugaufnahmen zur Stabilisierung verwendete Stahlmasse zumindest zum Teil ersetzt werden, was zu einer deutlichen Reduktion der Masse und erheblichen Verringerung des Massenträgheitsmoments der Werkzeugaufnahme führt. Bei Schrumpffuttern kann dadurch z.B. das Gewicht der Werkzeugaufnahme gegenüber gleichwertigen Stahlausführungen um bis zu 50% und das Massenträgheitsmoment um bis zu 60% reduziert werden. Davon können gleich mehrere Bauteile einer Werkzeugmaschine profitieren. So wirken bei der Ein- und Auswechslung der Werkzeugaufnahme an der Arbeitsspindel geringere Massenkräfte, was sowohl die Arbeitsspindel mit ihrer Lagerung als auch die Aufnahme schont. Durch die verringerte Masse sind auch die Stoßkräfte bei Einwechseln der Werkzeugaufnahme kleiner, was sich positiv auf den Verschleiß auswirkt. Für die Linearbewegung und die Beschleunigung der Werkzeugaufnahme sind außerdem geringere Antriebskräfte erforderlichen, so dass der Antrieb weniger Antriebsleistung benötigt und die Produktivität der Werkzeugmaschine gesteigert werden kann. Der Antrieb muss auch geringere Bremskräfte verkraften und kommt dadurch mit geringerer Kühlleistung und weniger Energieeinsatz aus. Insbesondere lassen sich durch das reduzierte Massenträgheitsmoment auch schnellere Drehzahländerungen realisieren und damit die Start- und Stoppvorgänge der Spindel beschleunigen.

Auch auf den Werkzeugwechselvorgang wirkt sich der Einsatz faserverstärkter Kunststoffe an Werkzeugaufnahmen positiv aus. Durch die geringeren zu bewegenden Massen kann der Werkzeugwechselvorgang schneller erfolgen und es sind geringere Kräfte zur Bewegung des Werkzeugwechslers und Werkzeugmagazins erforderlich. Dadurch kann die Lebensdauer des gesamten Werkzeugwechselsystems erhöht werden.

Neben den positiven Effekten auf der Maschinenseite kann die Faserverbundkonstruktion einer Werkzeugaufnahme auch eine Qualitätsverbesserung auf der Werkstückseite bewirken.

Durch geringere oszillierende Massen kann die Unwucht verringert und der Rundlauf der Werkzeuge verbessert werden. Das trägt zu einer Erhöhung der Standzeit des Werkzeugs und zu einer Verbesserung der Oberflächengüte bei. Darüber hinaus kann die aus faserverstärkten Kunststoff bestehende Hülse die Dämpfungseigenschaften der Werkzeugaufnahme verbessern, was in kritischen Bereichen die Schwingungen reduzieren und sich positiv auf die Oberflächengüte auswirken kann.

Die Werkzeugaufnahme kann als Schrumpffutter ausgebildet sein, bei dem die aus einem faserverstärkten Kunststoff bestehende Hülse auf den vorderen Spannbereich des aus Metall bestehenden Aufnahmekörpers aufgesetzt ist. Aufgrund der begrenzten Wärmebelastbarkeit einer derartigen Hülse wird hier der Schrumpfprozess zur Befestigung der Werkzeuge gegenüber den herkömmlichen Schrumpffuttern umgekehrt. Anstatt die Werkzeugaufnahme zur Aufnahme der Werkzeuge zu erwärmen, werden die Werkzeuge vor dem Einsetzen in die Werkzeugaufnahme heruntergekühlt.

In einer zweckmäßigen Ausführung kann die aus faserverstärktem Kunststoff bestehende Hülse den vorderen Spannbereich und zumindest einen Teil eines mittleren Bereichs des Aufnahmekörpers bilden. Lediglich die stärker belasteten Teile, wie z.B. der hintere Aufnahmebereich, ein Außenteil des mittleren Bereichs und ein Abdeckteil an der vorderen Stirnseite des Aufnahmekörpers können aus Stahl bestehen.

Es sind auch Ausführungsformen möglich, bei denen die gesamte Außenseite der Werkzeugaufnahme als Hülse aus einem faserverstärkten Kunststoff ausgebildet ist. Der Aufnahmekörper kann z.B. aus einem dünnwandigen metallischen Einsatz bestehen, der vollständig von einer die gesamte Außenkontur der Werkzeugaufnahme bildenden Hülse umschlossen ist.

Die mit einer Hülse aus faserverstärkten Kunststoff versehene Werkzeugaufnahme muss nicht zwangsläufig als Schrumpfaufnahme, sondern kann auch als Weldon-Aufnahme, als Spannzangenfutter mit einer Spannzange oder z.B. auch als Klemmaufnahme ausgebildet sein, bei der der vordere Spannbereich durch ein von einer Hülse aus faserverstärktem Kunststoff umgebenes Spannelement radial verformbar ist. Das Spannelement kann so ausgebildet sein, dass der vordere Spannbereich im Bereich der Aufnahmeöffnung durch eine Axialbewegung des Spannelements für das Spannen des Werkzeugs zusammengedrückt bzw. zum Lösen des Werkzeugs entspannt wird. Das Spannelement kann z.B. eine auf einem konischen Vorderteil des vorderen Spannbereichs axial verschiebbare Spannbuchse mit einer an die konische Außenfläche des Vorderteils angepassten konischen Innenfläche sein. Die axiale Verstellung des Spannelements kann durch einen als Innengewindering ausgebildeten Verstellring erfolgen, der mit einem Außengewinde auf dem Spannelement und einem Außengewinde auf einem im Durchmesser vergrößerten Hinterteil am Spannbereich zusammenwirkt. Die axiale Verschiebung des Spannelements kann aber auch durch andere Verstellmöglichkeiten erfolgen.

Der vordere Spannbereich kann aber auch mehrteilig, also in Modulbauweise aufgebaut sein. In einer ersten Ausführungsform sind der Aufnahmekörpers und die Hülse zum Abschluss des vorderen Spannbereichs so geformt, dass sie Auf-/Anlageflächen für einen Einschraubwerkzeug bilden. In einer besonders bevorzugten Ausführungsform sind diese Auf-/Anlageflächen als Doppelkonus mit verschiedenen Kegelwinkeln ausgebildet und der Aufnahmekörper weist im vorderen Spannbereich ein Innengewinde auf, das geeignet ist, das Außengewinde des Einschraubwerkzeuges aufzunehmen.

In einer weiteren Ausführungsform ist der vordere Spannbereich mit mindestens einem weiteren Modul mehrteilig aufgebaut. Idealerweise weisen dazu sowohl der Aufnahmekörper als auch die Hülse geeignete Stützflächen auf. In einer alternativen Ausführungsform kann sich die Hülse aber auch über den Aufnahmekörper hinaus erstrecken und die alleinige Aufnahme für das Modul bilden. Es versteht sich von selbst, dass ein geeignetes Modul zu den Stützflächen korrespondierende Anlageflächen aufweist. Ein solches Modul kann zum Beispiel eine Schrumpfaufnahme oder Hydrodehnspannfutter sein.

Wird die Werkzeugaufnahme in einer solchen Modulbauweise zusammengesetzt, ergibt sich zudem die Möglichkeit die Hülse zusätzlich unter axiale Verspannung zu setzen. Dadurch kann die Schwingung des Werkzeughalters während des Betriebs stärker gedämpft werden. Durch das Anbringen eines Moduls, vorzugsweise über Schraubverbindung, wird durch das Eindrehen in eine Aufnahmevorrichtung mit Spannraum für ein Werkzeug in den Aufnahmekörper die Hülse unter eine axiale Spannung gesetzt. Durch Aufbringen der Axialspannung kann die Federsteifigkeit der Werkzeugaufnahme insgesamt und damit verbunden die an der Werkzeugaufnahme besonders einfach anregbaren Schwingungsformen und ihre zugeordneten Resonanzfrequenzen gezielt verändert, insbesondere erhöht, werden.

Wie allgemein bekannt ist, bestimmt sich die Resonanzfrequenz eines Bauteils, wie z. B. einer Werkzeugaufnahme, aus der Quadratwurzel des Quotienten aus Federsteifigkeit und Masse. Durch die gezielte Änderung der Federsteifigkeit kann sowohl das Torsionsschwingungsverhalten, d. h. eine Schwingung der Werkzeugaufnahme um eine Drehachse herum betreffend, als auch das Transversalschwingungsverhalten, d. h. eine Schwingung der Werkzeugaufnahme in einer die Drehachse enthaltenden Ebene mit einer Schwingungsauslenkung der Werkzeugaufnahme orthogonal zur Drehachse betreffend, gezielt beeinflusst werden. Auch hat sich gezeigt, dass bei hohen mechanischen Spannungen im elastischen Bereich metallischer Materialien im Einzelfall die Dämpfung ansteigen kann.

Die aus faserverstärkten Kunststoff bestehende Hülse kann außerdem verschiedene Anordnungen von Kavitäten aufweisen, die sich günstig auf das Dämpfungsverhalten auswirken. Diese Kavitäten können beispielsweise durch im Wicklungsprozess eingebrachte Hohlkörper entstehen, oder eine, zwischen den Wicklungen gelagerte Schicht aus (laser-) gesintertem Material. Eine besonders vorteilhafte Verteilung der Kavitäten ist eine Anordnung bei der diese auf mindestens zwei, besser drei koaxial ineinander liegenden, gedachten Zylinder- oder Kegelmänteln liegen.

Ähnlich den Hohlstellen kann auch ein Kühlmittelleitsystem in die Hülse eingearbeitet werden. Da die Kühlmittelkanäle in einem solchen System nicht gebohrt werden müssen, sondern bereits bei der Herstellung eingearbeitet werden, ist ihre Formgebung nicht vorgegeben. Der Verlauf des Kühlmittelkanals kann sich somit aus verschieden geraden und/oder kurvenförmigen Abschnitten zusammensetzen um beispielsweise einen S-förmigen Verlauf zu bilden oder in axialer Richtung zu "mäandern". Es ist auch möglich, dass der Kühlmittelkanal sich innerhalb der Hülse spiralförmig um die Rotationsachse des Werkzeughalters nach oben "schraubt".

Das Kühlmittelleitsystem kann in einer alternativen Ausführungsform auch nachträglich in die Hülle eingearbeitet werden. Durch ein materialabtragendes Verfahren werden dabei die Verläufe des Kühlmittelkanals bzw. der Kühlmittelkanäle an der am Aufnahmekörper 3 anliegenden Innenseite freigelegt. Diese Kühlmittelkanäle werden später durch Anlage am metallischen Aufnahmekörper begrenzt. Ein solches Kühlmittelleitsystem hat den Vorteil, dass auch der Spannabschnitt und dadurch der Werkzeugschaft, insbesondere bei einem spiralförmigen Verlauf, mehr als nur unwesentlich gekühlt werden.

Um das Kühlmittel vom hinteren Aufnahmebereich 7 in die Hülse zu leiten weist die Werkzeugaufnahme eine Kühlmittelführung vom hinteren Aufnahmebereich in den vorderen auf, sowie einen Durchbruch des Aufnahmekörpers 3 im vorderen Aufnahmebereich 4, der mit der Hülse 11 verbunden ist.

Damit die Hülse 11 einfacher aufgebracht werden kann, kann der Aufnahmekörper in einer vorteilhaften Ausführungsform Führungsflächen oder ähnliche Elemente aufweisen, die eine optimale Positionierung erleichtern. Eine solche Führungsfläche kann zum Beispiel eine abgeflachte Passfläche am ansonsten runden Außendurchmesser des Aufnahmekörpers 3 sein, der in der Hülse 11 seine korrespondierende Gegenfläche findet. Eine solche Maßnahme gewährleistet auch, dass vorgesehene Verbindungspunkte wie ein Durchbruch im Aufnahme und eine Verbindungsstelle des Kühlmittelleitsystems in der Hülse aufeinandertreffen.

Um den Zusammenhalt von Hülse und Aufnahmekörper zu verbessern, ist es vorteilhaft die Reibungskräfte zwischen Metall und faserverstärktem Kunststoff zu erhöhen. Am einfachsten lässt sich dies durch eine Aufrauung der Metalloberfläche erreichen oder durch Einbringen von entsprechenden Materialien, z.B. Gummi in den faserverstärkten Kunststoff.

Die als Verstärkungshülse dienende Hülse kann vorzugsweise aus einem durch Kohlefasern, Glasfasern oder Aramidfasern verstärkten Kunststoff bestehen.

In einer weiteren erfindungsgemäßen Ausführung einer Werkzeugaufnahme ist die Hülse nicht als vorgefertigtes Element aufgeschoben, sondern in mehreren Schichten in einem Umwickelverfahren aufgebracht. Vorzugsweise weist der Aufnahmekörper 3 in seinem vorderen Spannbereich 4 dazu eine Vielzahl fest mit dem Aufnahmekörper verbundener nadel- und/oder stiftförmiger Elemente auf, die während des Umwickelvorgangs in die Hülse eindringen und so einen besonders stabilen Verbund schaffen, der im Idealfall erhöhte Dämpfungseigenschaften aufweist. Es versteht sich für den Fachmann von selbst, dass der Begriff Umwickelverfahren mehrere aus dem Stand der Technik bekannte Methoden wie zum Beispiel das Weben und insbesondere das Flechten einer Hülse aus mehr als einer Bahn faserverstärkten Kunststoffs mit einschließt.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Werkzeugaufnahme in einem Längsschnitt;
- **Figur 2**: ein zweites Ausführungsbeispiel einer Werkzeugaufnahme in einem Längsschnitt;
- **Figur 3**: ein drittes Ausführungsbeispiel einer Werkzeugaufnahme in einem Längsschnitt;
- **Figur 4**: ein viertes Ausführungsbeispiel einer Werkzeugaufnahme in einem Längsschnitt;
- **Figur 5**: ein fünftes Ausführungsbeispiel einer Werkzeugaufnahme in einem Längsschnitt und
- **Figur 6**: ein sechstes Ausführungsbeispiel einer Werkzeugaufnahme in einem Längsschnitt.

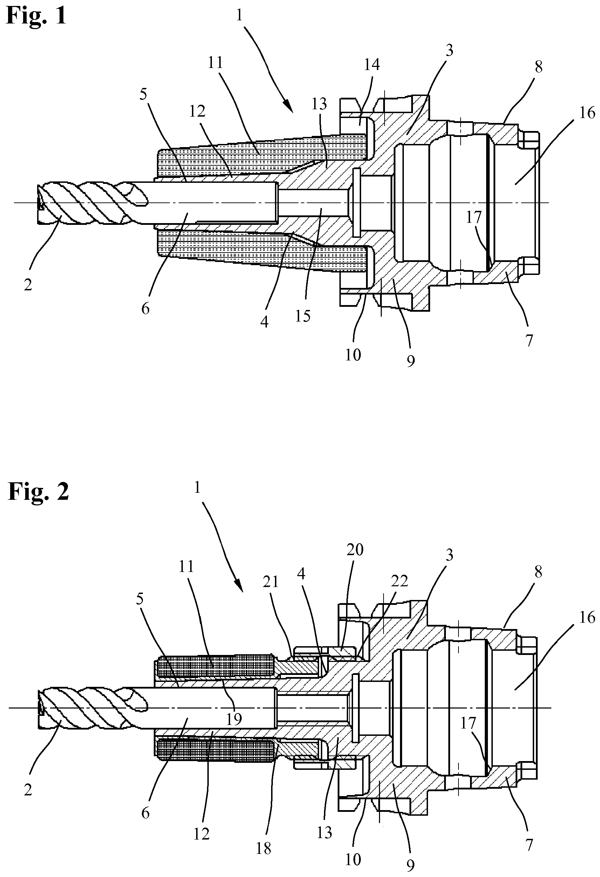

In Figur 1 ist eine hier mit einer HSK-Schnittstelle versehene Werkzeugaufnahme 1 zur kraftschlüssigen Halterung von Bohr-, Fräs-, Reibwerkzeugen oder anderen rotatorisch angetriebenen Werkzeugen 2 gezeigt. Die Werkzeugaufnahme 1 ist bei der gezeigten Ausführung als thermisches Spannfutter ausgebildet und enthält einen rotationssymmetrischen Aufnahmekörper 3, der an seinem werkzeugseitigen vorderen Ende einen Spannbereich 4 mit einer Aufnahmeöffnung 5 für einen Werkzeugschaft 6 des Werkzeugs 2 und an seinem maschinenseitigen hinteren Ende einen hier konischen hinteren Aufnahmebereich 7 mit einer konischen äußeren Spannfläche 8 zur Aufnahme in einer Arbeitsspindel einer Werkzeugmaschine enthält. Der aus Stahl bestehende Aufnahmekörper 3 weist ferner einen zylindrischen mittleren Bereich 9 mit einer Greiferrille 10 zum Eingriff eines Werkzeugwechslers. Auf dem vorderen Spannbereich 4 des Aufnahmekörpers 3 ist eine aus kohlenstofffaserverstärktem Kunststoff (CFK) oder einem anderen faserverstärkten Kunststoff hergestellte Hülse 11 angeordnet.

Bei der in Figur 1 gezeigten Ausführung ist die aus CFK bestehende Hülse 11 mittels eines Presssitzes auf dem vorderen Spannbereich 4 des aus Metall bestehenden Aufnahmekörpers 3 angeordnet. Zur Montage der aus CFK bestehenden Hülse 11 wird der Aufnahmekörper 3 z.B. auf - 180°C heruntergekühlt. Dann kann die auf Raumtemperatur befindliche Hülse 11 auf den sich durch die Abkühlung zusammenziehenden vorderen Spannbereich 4 aufgesetzt werden. Wenn sich der Aufnahmekörper 3 wieder erwärmt und dadurch ausdehnt, wird die Hülse 11 fixiert. Das Verhältnis des Innendurchmessers der Hülse 11 zum Außendurchmesser des vorderen Spannbereichs 4 ist dabei so gewählt, dass die Hülse 11 unter radialer Vorspannung fest auf dem vorderen Spannbereich 4 gehalten wird, wenn sich der Aufnahmekörper 3 nach der Abkühlung wieder auf Raumtemperatur erwärmt und radial ausdehnt.

Alternativ oder ergänzend zur Ausbildung eines Presssitzes können Aufnahmekörper 3 und Hülse 11 mittels eines Formschlusses miteinander verbunden sein. In einer bevorzugten Ausführungsform weist der Aufnahmekörper 3 Unebenheiten, z. B. in Form von radial nach außen gerichteten Lamellen, auf, in die sich die Hülse 11 eindrückt. Ein Formschluss kann so bereits durch elastische Verformung der Bauteile erzielt werden. Bevorzugt weist die Hülse 11 zu den Unebenheiten des Aufnahmekörpers 3 korrespondierende Vertiefungen auf, die bereits im unverspannten Zustand formschlüssig ineinandergreifen.

In einer weiteren erfindungsgemäßen Ausführung einer Werkzeugaufnahme wird die Hülse nicht als vorgefertigtes Element aufgeschoben, sondern in mehreren Schichten in einem Umwickelverfahren aufgebracht. Hierzu weist der Aufnahmekörper 3 in seinem vorderen Spannbereich 4 eine Vielzahl fest mit dem Aufnahmekörper verbundener nadel- und/oder stiftförmiger Elemente auf, die während des Umwickelvorgangs in die Hülse eindringen und so einen besonders stabilen Verbund schaffen, der im Idealfall erhöhte Dämpfungseigenschaften aufweist. Es versteht sich für den Fachmann von selbst, dass der Begriff Umwickelverfahren mehrere aus dem Stand der Technik bekannte Methoden wie zum Beispiel das Weben und insbesondere das Flechten einer Hülse aus mehr als einer Bahn faserverstärkten Kunststoffs mit einschließt.

Wie aus Figur 1 hervorgeht, ist der vordere Spannbereich 4 gegenüber dem Außendurchmesser der Hülse 11 relativ schlank und dünnwandig ausgeführt. Der Spannbereich 4 enthält hier einen leicht konischen, schlanken Vorderteil 12 mit der darin angeordneten Aufnahmeöffnung 5 für den Werkzeugschaft 6 und einen verbreiterten Hinterteil 13. Die Hülse 11 erstreckt sich über den schlankeren Vorderteil 12, den verbreiterten Hinterteil 13 und greift in eine Vertiefung 14 an der vorderen Stirnseite des zylindrischen mittleren Bereichs 9 des Aufnahmekörpers 3 ein. Die Werkzeugaufnahme 3 weist bei der gezeigten Ausführung eine durchgehende Öffnung 15 mit einem erweiterten hinteren Hohlraum 16 im hinteren Aufnahmebereich 7 auf. An der Innenseite des Hohlraums 16 sind Spannflächen 17 für Spannzangen oder andere Spannelemente zur Innenspannung der Werkzeugaufnahme 1 in einer Arbeitsspindel vorgesehen.

Im Unterschied zu herkömmlichen thermischen Spannfuttern, bei denen die Werkzeugaufnahme 1 zum Spannen der Werkzeuge zunächst erwärmt und anschließend wieder abgekühlt werden muss, wird hier das Werkzeug 2 zum Spannen innerhalb der Werkzeugaufnahme 1 zunächst abgekühlt. Wenn sich der Durchmesser des Werkzeugschafts 6 durch Abkühlung verringert hat, kann das Werkzeug 2 in die Aufnahmeöffnung 5 eingesetzt werden. Gelangt das Werkzeug 2 nach dem Einsetzen wieder auf Raumtemperatur und dehnt sich dadurch wieder aus, wird der Werkzeugschaft 6 in der Aufnahmeöffnung 5 fixiert. Auch hier wird das Verhältnis des Innendurchmessers der Aufnahmeöffnung 5 zum Außendurchmesser des Werkzeugschafts 6 derart gewählt, dass das Werkzeug 2 bei den üblichen Betriebstemperaturen fest in der Aufnahmeöffnung 5 der Werkzeugaufnahme 1 gehalten wird.

Zum Lösen des Werkzeugs 2 wird die gesamte Einheit aus Werkzeugaufnahme 1 und Werkzeug 2 abgekühlt. Dabei bleibt der Innendurchmesser der Hülse 11 je nach Faserlage nahezu unverändert. Das dünnwandige Vorderteil 12 bildet mit der Hülse 11 einen Pressverband, steht also unter radialer Vorspannung von außen. Im Vorderteil 12 bewirkt das Abkühlen zwar eine Verringerung des Umfangs, führt aber erst nach dem Abbau der Vorspannung zu einer Verkleinerung der Aufnahmeöffnung 5. Da sich der Durchmesser des Werkzeugschafts 6 durch das Abkühlen verringert, der Durchmesser der Aufnahmeöffnung 5 gleich bleibt, kann das Werkzeug 2 entnommen werden.

In Figur 2 ist ein nicht erfindungsgemäßes Ausführungsbeispiel einer Werkzeugaufnahme 1 gezeigt. Auch diese Werkzeugaufnahme 1 weist einen aus Stahl bestehenden Aufnahmekörper 3 mit einem vorderen Spannbereich 4 zum Spannen des Werkzeugs 2 und einem hinteren Aufnahmebereich 7 zur Aufnahme in einer Arbeitsspindel einer Werkzeugmaschine auf. Der vordere Spannbereich 4 wird auch hier durch einen konischen, schlanken Vorderteil 12 und einem im Durchmesser etwas vergrößerten Hinterteil 13 gebildet. Bei dieser Ausführung wird das Werkzeug 2 jedoch nicht durch Schrumpfen, sondern durch radiales Zusammendrücken des konischen, schlanken Vorderteils 12 gespannt. Das radiale Zusammendrücken des Vorderteils 12 erfolgt durch ein auf dem Vorderteil 12 axial verschiebbares Spannelement 18. Das hier als Spannbuchse ausgebildete Spanneelement18 ist gegenüber dem Aufnahmekörper 3 axial verstellbar und weist eine an die konische Außenfläche des Vorderteils 12 angepasste konische Innenfläche 19 auf. Das im vorderen Bereich ebenfalls dünnwandige buchsenförmige Spannelement 18 enthält an seiner Außenseite eine aus CFK oder einem anderen faserverstärkten Kunststoff bestehende Hülse 11, die ebenfalls zur Verstärkung dient.

Die axiale Verstellung des von der Hülse 11 umgebenen Spannelements 18 gegenüber dem Aufnahmekörper 3 erfolgt durch einen als Gewindering ausgeführten Verstellring 20, der mit einem Außengewinde 21 auf der Spannbuchse 18 und einem Außengewinde 22 auf dem im Durchmesser gegenüber dem Vorderteil 12 vergrößerten Hinterteil des Spannbereichs 4 zusammenwirkt. Die beiden Außengewinde weisen unterschiedliche Steigung auf, so dass das buchsenförmige Spannelement 18 durch Drehung des Verstellrings 20 entweder zum Spannen des Werkzeugs 2 nach hinten in Richtung des Aufnahmebereichs 7 oder zum Lösen des Werkzeugs 2 nach vorne verschoben werden kann. Die Axialverstellung des Spannelements 18 kann in Art eines Spannschlosses mit einem Rechts- und Linksgewinde oder durch ähnliche Verstellungen erfolgen.

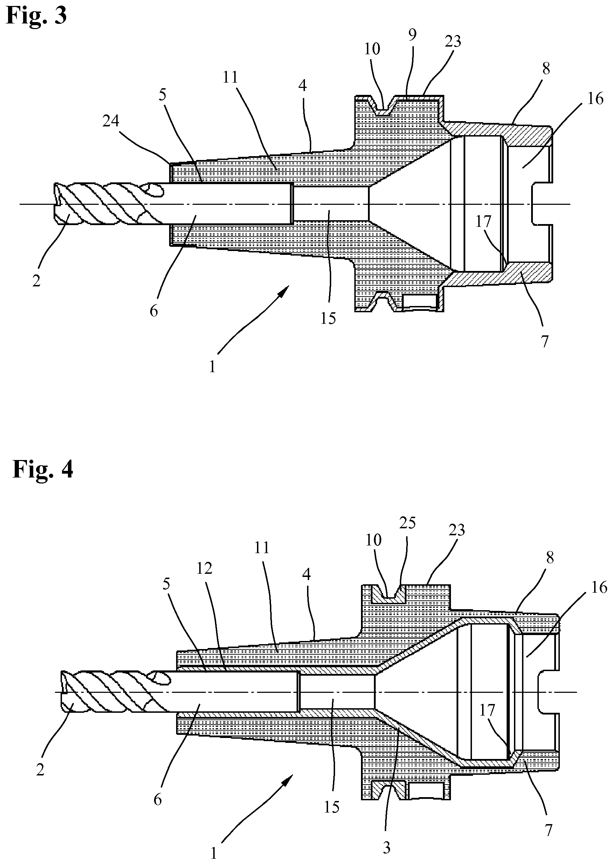

Bei der in Figur 3 gezeigten, ebenfalls nicht erfindungsgemäßen Ausführung wird nahezu der gesamte vordere Spannbereich 4 und auch ein Großteil des zylindrischen mittleren Bereichs 9 durch eine aus CFK oder einem anderen faserverstärkten Kunststoff bestehende Hülse 11 gebildet. Lediglich der beim Einsetzen der Werkzeugaufnahme in die Arbeitsspindel 1 stark beanspruchte Aufnahmebereich 7, ein Außenteil 23 des zylindrischen mittleren Bereichs 9 und ein an der vorderen Stirnseite der Werkzeugaufnahme angeordnetes Abdeckteil 24 sind hier aus Stahl hergestellt. Auch diese Werkzeugaufnahme 1 ist als thermisches Spannfutter ausgebildet, bei dem das Werkzeug 2 zum Einsetzen herabgekühlt wird.

Um die Reibung zwischen Werkzeugschaft 6 und Hülse 11 zur erhöhen, können sowohl die Außenfläche des Werkzeugschafts 6 als auch die Innenfläche der Hülse 11 bearbeitet werden. Dies kann beispielsweise geschehen durch mechanisches oder chemisches Aufrauen der Oberflächen oder durch Aufbringen einer Beschichtung. Es versteht sich, dass ähnliche Verfahren dazu verwendet werden können, um Grundkörper 3 und Hülse 11 miteinander zu verbinden.

In Figur 4 ist ein weiteres Ausführungsbeispiel einer mit einer Hülse 11 aus faserverstärkten Kohlenstoff versehenen Werkzeugaufnahme 1 gezeigt. Bei dieser Ausführung besteht der Aufnahmekörper 3 aus einem dünnwandigen Einsatz aus Metall, der vollständig von einer die gesamte Außenkontur der Werkzeugaufnahme 1 bildenden Hülse 11 aus faserverstärkten Kohlenstoff umschlossen ist. Die Außenkontur des vorderen Spannbereichs 4 und auch die Außenkontur des hinteren Aufnahmebereichs 7 werden durch die Hülse 11 gebildet. Der als Einsatz ausgebildete Aufnahmekörper 3 weist ebenfalls einen schlanken, dünnwandigen Vorderteil 12 mit einer Aufnahmeöffnung 5 für einen Werkzeugschaft 6 eines Werkzeugs 2 auf. An der Außenseite der Hülse 11 können aus Metall bestehende Einlagen 25 zur Bildung der Greiferrille 10 eingebettet sein.

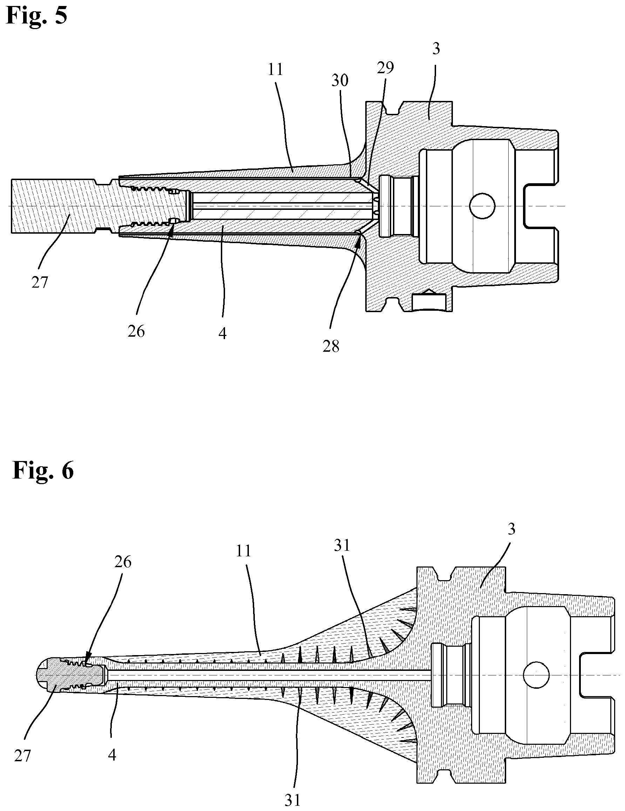

Bei der in Figur 5 dargestellten Ausführung weist der Aufnahmekörper 3 im vorderen Spannbereich 4 eine Aufnahme 26 für ein Einschraubwerkzeug 27 auf. Die Aufnahme 26 ist bei der gezeigten Ausführung als Doppelkonus ausgeführt. In dem Aufnahmekörper 3 und/oder der Hülse 11 ist ein Kühlmittelleitsystem 28 in Form von Bohrungen 29, Kanälen 30, Nuten, Spalten oder dgl. vorgesehen.

In der Ausführungsform von Figur 6 ist die Hülse 11 durch ein Umwickelverfahren aufgebracht. Der vordere Spannbereich 4 des Aufnahmekörpers 3 weist eine Vielzahl von nadel- und/oder stiftförmigen Elementen 31 auf, die beim Wickelprozess in die Hülse 11 eindringen. Auch bei dieser Ausführung weist der Aufnahmekörper 3 im vorderen Spannbereich 4 eine z.B. als Doppelkonus ausgebildete Aufnahme 26 für ein Einschraubwerkzeug 27 auf.

In weiteren - hier nicht gesondert dargestellten - Ausführungen kann die Werkzeugaufnahme 1 auch als Weldon-Aufnahme oder als Spannzangenfutter ausgebildet sein. Die Erfindung ist selbstverständlich auch nicht auf HSK-Werkzeugaufnahmen beschränkt. An dem Aufnahmekörper 3 können in entsprechender Weise auch SK-, JIS-, BT-, ABS-, Capto- oder andere geeignete Schnittstellen vorgesehen sein.

## Patentansprüche

1. Werkzeugaufnahme (1) für rotatorisch angetriebene Werkzeuge (2) mit einem rotationssymmetrischen aus Metall bestehenden Aufnahmekörper (3), wobei die Werkzeugaufnahme (1) einen vorderen Spannbereich (4) mit einer Aufnahmeöffnung (5) für einen Werkzeugschaft (6) des Werkzeugs (2) und einen hinteren Aufnahmebereich (7) zur Aufnahme in einer Arbeitsspindel einer Werkzeugmaschine enthält, wobei zumindest im vorderen Spannbereich (4) der Werkzeugaufnahme (1) eine aus einem faserverstärkten Kunststoff bestehende Hülse (11) angeordnet ist, **dadurch gekennzeichnet, dass** die Hülse (11) auf den Aufnahmekörper (3) im vorderen Spannbereich (4) der Werkzeugaufnahme (1) aufgeschrumpft ist.

2. Werkzeugaufnahme nach Anspruch 1, **dadurch gekennzeichnet, dass** die Hülse (11) auf den vorderen Spannbereich (4) des aus Metall bestehenden Aufnahmekörpers (3) aufgesetzt ist.

3. Werkzeugaufnahme nach einem Anspruch 1 oder 2, **dadurch gekennzeichnet, dass** die Hülse (11) ein Kühlmittelleitsystem (28) aufweist.

4. Werkzeugaufnahme nach Anspruch 3, **dadurch gekennzeichnet, dass** das Kühlmittelleitsystem (28) mindestens einen Kühlmittelkanal aufweist, dessen Verlauf sich abschnittsweise aus geraden und kurvenförmigen Bereichen zusammensetzt.

5. Werkzeugaufnahme nach Anspruch 3 oder 4, **dadurch gekennzeichnet, dass** das Kühlmittelleitsystem teilweise von dem aus Metall bestehenden Aufnahmekörper (3) und der Hülse (11) begrenzt wird.

6. Werkzeugaufnahme nach einem der Ansprüche 1 bis 5, **dadurch gekennzeichnet, dass** der Aufnahmekörper (3) und/oder die Hülse (11) eine Aufnahme (26) für ein Einschraubwerkzeug (27) aufweisen.

7. Werkzeugaufnahme nach Anspruch 6, **dadurch gekennzeichnet, dass** die Aufnahme (26) als Doppelkonus ausgebildet ist.

8. Werkzeugaufnahme (1) für rotatorisch angetriebene Werkzeuge (2) mit einem rotationssymmetrischen aus Metall bestehenden Aufnahmekörper (3), wobei die Werkzeugaufnahme (1) einen vorderen Spannbereich (4) mit einer Aufnahmeöffnung (5) für einen Werkzeugschaft (6) des Werkzeugs (2) und einen hinteren Aufnahmebereich (7) zur Aufnahme in einer Arbeitsspindel einer Werkzeugmaschine enthält, wobei zumindest im vorderen Spannbereich (4) der Werkzeugaufnahme (1) eine aus einem faserverstärkten Kunststoff bestehende Hülse (11) angeordnet ist, wobei die Hülse (11) durch ein Umwickel- und/ oder Flechtverfahren aufgebracht wird, **dadurch gekennzeichnet, dass** der vordere Spannbereich (4) der Werkzeugaufnahme (1) eine Vielzahl von nadel- und/oder stiftförmigen Elementen (31) aufweist, die beim Wickel- und/ oder Flechtprozess in die Hülse (11) eindringen.

9. Werkzeugaufnahme nach einem der vorherigen Ansprüche, **dadurch gekennzeichnet, dass** die Hülse (11) aus einem durch Kohlefasern, Glasfasern oder Aramidfasern verstärkten Kunststoff besteht.

## Claims

1. Tool holder (1) for rotationally driven tools (2), having a rotationally symmetrical holding body (3) consisting of metal, wherein the tool holder (1) contains a front, clamping region (4) with a holding opening (5) for a shank (6) of the tool (2) and also contains a rear, holding region (7) for being held in a work spindle of a machine tool, wherein a sleeve (11) consisting of a fibre-reinforced plastic material is arranged at least in the front, clamping region (4) of the tool holder (1), **characterized in that** the sleeve (11) is shrink-fitted onto the holding body (3) in the front, clamping region (4) of the tool holder (1).

2. Tool holder according to Claim 1, **characterized in that** the sleeve (11) is positioned on the front, clamping region (4) of the holding body (3), which consists of metal.

3. Tool holder according to Claim 1 or 2, **characterized in that** the sleeve (11) has a coolant-directing system (28) .

4. Tool holder according to Claim 3, **characterized in that** the coolant-directing system (28) has at least one coolant channel, which is made up, in sections, of rectilinear and curved regions.

5. Tool holder according to Claim 3 or 4, **characterized in that** the coolant-directing system is delimited, in parts, by the sleeve (11) and the holding body (3), which consists of metal.

6. Tool holder according to one of Claim 1 to 5, **characterized in that** the holding body (3) and/or the sleeve (11) have/has a holder (26) for a screw-in tool (27) .

7. Tool holder according to Claim 6, **characterized in that** the holder (26) is designed in the form of a double cone.

8. Tool holder (1) for rotationally driven tools (2), having a rotationally symmetrical holding body (3) consisting of metal, wherein the tool holder (1) contains a front, clamping region (4) with a holding opening (5) for a shank (6) of the tool (2) and also contains a rear, holding region (7) for being held in a work spindle of a machine tool, wherein a sleeve (11) consisting of a fibre-reinforced plastic material is arranged at least in the front, clamping region (4) of the tool holder (1), wherein the sleeve (11) is fitted by a wrapping and/or braiding process, **characterized in that** the front, clamping region (4) of the tool holder (1) has a multiplicity of needle-form and/or pin-form elements (31), which penetrate into the sleeve (11) during the wrapping and/or braiding process.

9. Tool holder according to one of the preceding claims, **characterized in that** the sleeve (11) consists of a plastic material reinforced by carbon fibres, glass fibres or aramid fibres.

## Revendications

1. Logement d'outil (1) pour outils (2) entraînés en rotation avec un corps de logement (3) constitué de métal à symétrie de révolution, le logement d'outil (1) contenant une zone de serrage avant (4) avec une ouverture de logement (5) pour une tige d'outil (6) de l'outil (2) et une zone de logement arrière (7) pour le logement dans une broche de travail d'une machine-outil, une douille (11) constituée d'une matière plastique renforcée par des fibres étant agencée au moins dans la zone de serrage avant (4) du logement d'outil (1), **caractérisé en ce que** la douille (11) est frettée sur le corps de logement (3) dans la zone de serrage avant (4) du logement d'outil (1).

2. Logement d'outil selon la revendication 1, **caractérisé en ce que** la douille (11) est placée sur la zone de serrage avant (4) du corps de logement (3) constitué de métal.

3. Logement d'outil selon la revendication 1 ou 2, **caractérisé en ce que** la douille (11) présente un système de guidage de fluide de refroidissement (28).

4. Logement d'outil selon la revendication 3, **caractérisé en ce que** le système de guidage de fluide de refroidissement (28) présente au moins un canal de fluide de refroidissement dont le tracé se compose par sections de zones droites et de zones courbes.

5. Logement d'outil selon la revendication 3 ou 4, **caractérisé en ce que** le système de guidage de fluide de refroidissement est délimité en partie par le corps de logement (3) constitué de métal et la douille (11).

6. Logement d'outil selon l'une quelconque des revendications 1 à 5, **caractérisé en ce que** le corps de logement (3) et/ou la douille (11) présentent un logement (26) pour un outil à visser (27).

7. Logement d'outil selon la revendication 6, **caractérisé en ce que** le logement (26) est configuré sous forme de double cône.

8. Logement d'outil (1) pour outils (2) entraînés en rotation avec un corps de logement (3) constitué de métal à symétrie de révolution, le logement d'outil (1) contenant une zone de serrage avant (4) avec une ouverture de logement (5) pour une tige d'outil (6) de l'outil (2) et une zone de logement arrière (7) pour le logement dans une broche de travail d'une machine-outil, une douille (11) constituée d'une matière plastique renforcée par des fibres étant agencée au moins dans la zone de serrage avant (4) du logement d'outil (1), la douille (11) étant appliquée par un procédé d'enroulement et/ou de tressage, **caractérisé en ce que** la zone de serrage avant (4) du logement d'outil (1) présente une pluralité d'éléments (31) en forme d'aiguille et/ou de goupille qui pénètrent dans la douille (11) lors du procédé d'enroulement et/ou de tressage.

9. Logement d'outil selon l'une quelconque des revendications précédentes, **caractérisé en ce que** la douille (11) est constituée d'une matière plastique renforcée par des fibres de carbone, des fibres de verre ou des fibres d'aramide.
